(19) Europäisches Patentamt

European Patent Office

Office européen des brevets

(11) **EP 1 926 844 B1**

(12) # EUROPEAN PATENT SPECIFICATION

(45) Date of publication and mention
of the grant of the patent:
**06.05.2009 Bulletin 2009/19**

(51) Int Cl.:
*H02J 3/38* $^{(2006.01)}$

(21) Application number: **06775187.5**

(22) Date of filing: **14.09.2006**

(86) International application number:
**PCT/CH2006/000494**

(87) International publication number:
**WO 2007/033505 (29.03.2007 Gazette 2007/13)**

(54) **METHOD FOR DETECTING ISLANDING OPERATION OF A DISTRIBUTED GENERATOR**

VERFAHREN ZUM ERKENNEN EINES INSELBETRIEBS BEI EINEM VERTEILTEN GENERATOR

PROCEDE POUR LA DETECTION D'OPERATION D'ILOTAGE DANS UN GENERATEUR DISTRIBUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.09.2005 EP 05405545**

(43) Date of publication of application:
**04.06.2008 Bulletin 2008/23**

(73) Proprietor: **ABB Schweiz AG**
**5400 Baden (CH)**

(72) Inventors:
• **PONNALURI, Srinivas**
**CH-5417 Untersiggenthal (CH)**
• **RONNER, Beat**
**CH-4464 Maisprach (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(56) References cited:
**EP-A- 0 746 078        WO-A-01/82444**
**US-A1- 2001 056 330        US-A1- 2003 098 671**
**US-A1- 2005 057 950**

• **JERAPUTRA C ET AL: "An improved anti-islanding algorithm for utility interconnection of multiple distributed fuel cell powered generations" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA, IEEE, US, 6 March 2005 (2005-03-06), pages 103-108Vol1, XP010809382 ISBN: 0-7803-8975-1**
• **JERAPUTRA C ET AL: "Development of a robust anti-islanding algorithm for utility interconnection of distributed fuel cell powered generation" APPLIED POWER ELECTRONICS CONFERENCE AND EXPOSITION, 2004. APEC '04. NINETEENTH ANNUAL IEEE ANAHEIM, CA, USA 22-26 FEB. 2004, PISCATAWAY, NJ, USA, IEEE, vol. 3, 22 February 2004 (2004-02-22), pages 1534-1540, XP010705286 ISBN: 0-7803-8269-2**
• **KIM J E ET AL: "Islanding detection method of distributed generation units connected to power distribution system" POWER SYSTEM TECHNOLOGY, 2000. PROCEEDINGS. POWERCON 2000. INTERNATIONAL CONFERENCE ON 4-7 DECEMBER 2000, PISCATAWAY, NJ, USA,IEEE, 4 December 2000 (2000-12-04), pages 643-647, XP010528073 ISBN: 0-7803-6338-8 cited in the application**
• **JUN YIN ET AL: "Recent developments in islanding detection for distributed power generation" POWER ENGINEERING, 2004. LESCOPE-04. 2004 LARGE ENGINEERING SYSTEMS CONFERENCE ON HALIFAX, NS, CANADA 28-30 JULY 2004, PISCATAWAY, NJ, USA,IEEE, US, 28 July 2004 (2004-07-28), pages 124-128, XP010738118 ISBN: 0-7803-8386-9**

**(Cont. next page)**

EP 1 926 844 B1

- **YAMAGUCHI M ET AL: "Development of a new utility-connected photovoltaic inverter LINE BACK" 30 October 1994 (1994-10-30), TELECOMMUNICATIONS ENERGY CONFERENCE, 1994. INTELEC '94., 16TH INTERNATIONAL VANCOUVER, BC, CANADA 30 OCT.-3 NOV. 1994, NEW YORK, NY, USA,IEEE, PAGE(S) 676-682 , XP010136368 ISBN: 0-7803-2034-4 page 680**

- **YE Z ET AL: "A new family of active antiislanding schemes based on DQ implementation for grid-connected inverters" 20 June 2004 (2004-06-20), POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, PAGE(S) 235-241VOL1 , XP010737997 ISBN: 0-7803-8399-0 the whole document**

**Description**

Background of the Invention

The present invention relates to the field of power electronics, and more particularly to a method for detecting the islanding operation of a distributed generator connected to a utility grid and to a device for detecting islanding operation of a distributed power generator.

Distributed resources such as distributed power generators are used to feed additional active power into a utility grid close to electrical loads or to ensure standby power for critical loads when power from the grid is temporarily unavailable. Distributed generators are connected to the power grid with power electronic switches.

When one or more distributed resources become isolated from the rest of the power system and inadvertently continue to serve local island loads separately from the utility grid, the condition is known as "loss of mains" or "unintentional islanding".

Upon having lost the stability provided by the utility grid, differences in active and reactive power of the local island load and the power generation of the distributed generator may lead to sudden large voltage changes. This usually causes the distributed generator protection device to act and trip immediately.

If, however, the active and reactive power of the local island load matches the active and reactive power generation, there will be no voltage jump that would trigger the protection device. Unless there is an alternative islanding detection, the distributed generator would continue to operate. Even though some of the distributed generators are designed to run in islanding, a number of potentially serious problems are associated with islanding:

- Distributed-generation equipment such as a motor-generator set can become an isolated source of electricity during power outages on the grid, posing harm to utility personnel and equipment.

- Customer equipment may be damaged by uncontrolled voltage and frequency excursions.

- Utility equipment, such as surge arresters, may be damaged by over-voltages that occur during a shift neutral reference or resonance.

- Utility personnel or the public may be harmed by the inadvertent energizing of the lines by the distributed resources.

It is therefore desirable to immediately react upon detection of an unintentional loss of mains. In order to address the above-mentioried safety concerns in distributed generation, Underwrites Laboratories Standard UL 1741 was developed. Standard UL 1741 requires tripping of the distributed generator within two seconds once the connection to the utility grid has been lost.

Background Art

In "Islanding Detection Method of Distributed Generation Units Connected to Power Distribution System-", J. E. Kim, J. S. Hwang, IEEE 2000, a method is proposed for distributed power generation based on synchronous generators. To detect islanding, the internal electromagnetic field of the generator is increased and the change in the reactive power flow and the load voltage are examined. As the internal impedance of the power generator is up to a few percent of the power generators rating, a one percent change in the generated voltage will produce a large change in reactive power when grid is present. Due to the utility grids stability, the load voltage is not affected. Once the connecting breaker is open there will be no significant change in reactive power and the load voltage will change in the same proportion as the internal voltage variation: Using this information the Loss of Mains is detected.

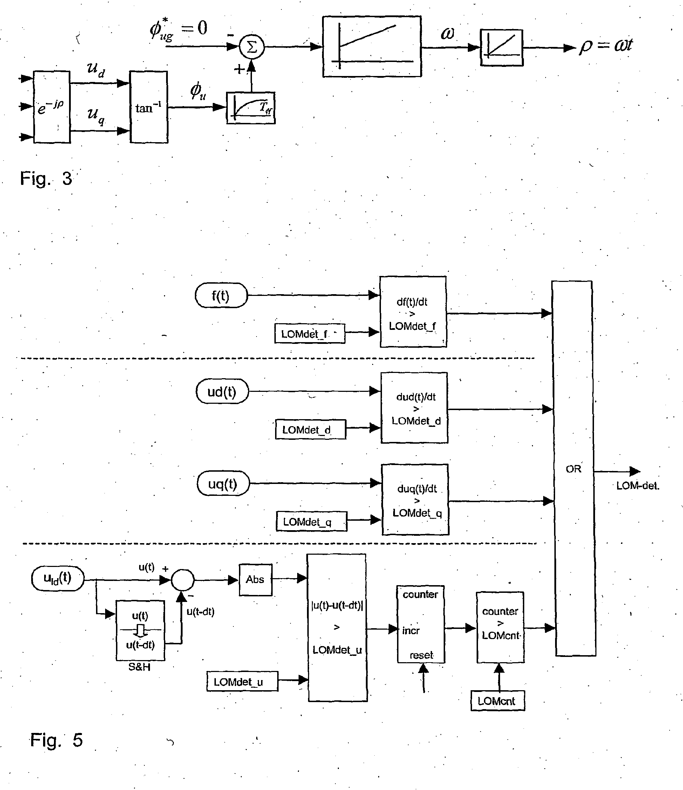

In "Performance of Inverter Interfaced Distributed Generation", Simon R. Wall, IEEE 2001, a method is proposed where the frequency output of a phase locked loop (PLL as shown in Fig. 3 is disturbed by adding an additional disturbance frequency. When the utility grid is present the load voltage is nearly unchanged. Increase in frequency will increase the phase angle of the inverter internal voltage. As the load voltage remains steady in presence of the utility grid voltage, the active and reactive power controllers will compensate the angle error. In case of an islanded network an increase in frequency will cause the internal voltage angle to advance. As the load impedance is significantly higher than the internal impedance of the power generator, the load voltage will follow the change in phase angle. This would not change the active and reactive powers significantly but the PLL will see a phase lead in the voltage and try to chase the same by increasing the frequency further. This process will go on until a rate of change of frequency-trip is activated or an over frequency-trip occurs.

In "An Improved Anti-Islanding Algorithm for Utility Interconnection of Multiple Distributed Fuel Cell Powered Generations". CH. JERAPUTRA et al, IEEE 2005, an anti-islanding algorithm for utility interconnection of multiple distributed fuel cell powered generations (DFPG) is presented. While the power control algorithm continuously perturbs the reactive power supplied by the DFPG, the proposed algorithm calculates the cross-correlation index of a rate of change of the frequency deviation with respect to the reactive power to confirm islanding. If this index is above 50%, the algorithm further initiates the reactive power perturbation and continues to calculate the correlation index. If the index exceeds 80%, the occurrence of islanding can be confirmed. The proposed method is capable of detecting the occurrence of islanding in the presence of several DFPGs, which are independently operating.

Summary of the invention

It is an object of the invention to propose a new method for detecting islanding of a distributed power generator and to provide a device for detecting islanding operation of a distributed power generator as defined in claims 1 and 8, repectively.

The inventive method comprises the steps of introducing a reactive current reference wave, detecting load voltage changes caused by changes in the reactive current reverence wave, and determining whether the detected load voltage changes exceed a predefined islanding detection threshold value, indicating a loss of mains and an islanding operation of the power generator. When the grid is present the local island load voltage is same as the grid voltage. In case of grid disconnection, the local island load voltage is provided by the inverter or distributed generator.

The reactive current reference wave can be a square wave, a ramp wave, a sine wave or a trapezoidal wave. Load voltage samples are taken every time the reference current passes a threshold value or, in case of a square wave, when it changes its value.

Preferably, a counter value is incremented every time the detected load voltage changes exceed the predefined islanding detection threshold value, and the loss of mains is detected if within a predefined period of time the increment of the counter value exceeds a predefined value. If the counter value is reset at the beginning of the predefined period of time, the loss of mains is detected if the counter value exceeds the predefined value at the end of the predefined period of time.

If the predefined islanding detection threshold value of the voltage is chosen to be at least approximately 50 per cent of the impedance level, the reliability of islanding detection can be approved. For values substantially below 50 per cent of the impedance level, there is a certain risk of false detection of islanding operation.

If the injected current used is a harmonic, it's frequency is preferably set below the LCL filter corner frequency of the inverter. Otherwise a substantial part of the injected current is filtered by the capacitor and only a small part reaches the utility grid.

With the inventive loss of mains detection, islanding can be detected within a shortest period of time, even if the local islands active and reactive load matches exactly the distributed generators active and reactive power generation. So even without a sudden voltage change, unintentional islanding can immediately be detected and control electronics can safely turn of the distributed power generator.

Brief Description of the Drawings

The inventive method and device will be explained in more details on the bases of the drawings. The drawings show in

Fig 1.    a circuit model in grid operation;
Fig 2.    resonant circuit for anti-islanding test as defined by the standard UL 1741,
Fig 3.    an exemplary general phase locked loop (PLL),
Fig 4.    the reactive current references generated for the inventive loss of mains detection, and
Fig 5.    the inventive logic for islanding detection.

Description of the Preferred Embodiments

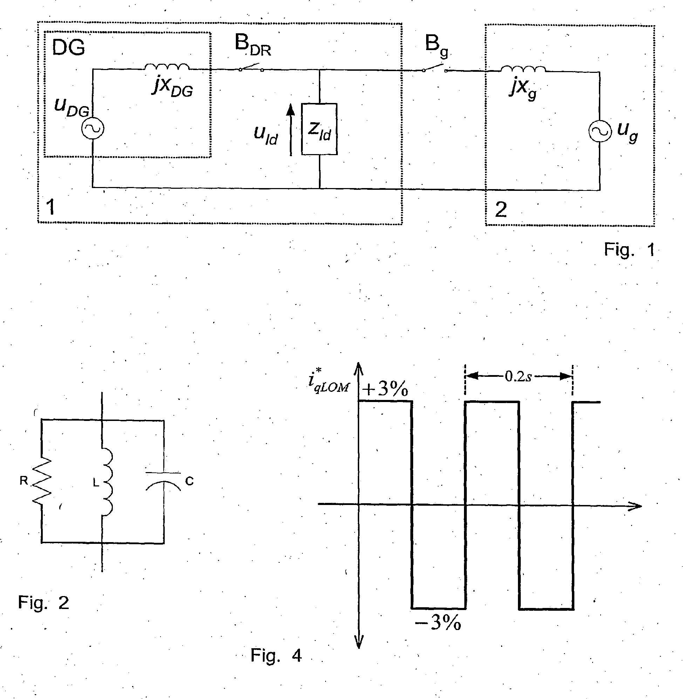

As mentioned above, distributed generators generate and feed active power in to the utility grid and some of them also have the capability to run in island mode. However, it is important for safety reasons, that such power generation does not take place in an unintentional island. An unintentional island can be created because of opening of a breaker by maintenance personnel or by tripping of a far end breaker. Such a situation is schematically shown in Fig 1. When the incoming breaker $B_g$ is opened the power electronics based distributed generator DG, which is also often referred to as distributed resource (DR) or uninterruptible power supply (UPS), continues to supply the local island with power.

When the grid is present the local island load voltage is same as the grid voltage. In case of grid disconnection, the local island load voltage is provided by the inverter or distributed generator. If the local islands active and reactive load is significantly different from the distributed generators active and reactive power generation, then after opening of the incoming breaker this difference will create a large voltage change. The large change in voltage indicates as loss of mains. The distribute generator protection will act and safely open contactor $B_{DR}$ within time. The distributed generator is disconnected and no further action is required.

If, however, the local islands active and reactive load matches exactly the distributed generators active and reactive power generation, the control electronics will see no voltage jump and the distributed generator continues to operate. The UL 1741 standard specifies that the distributed generator must trip even under such a condition within two seconds. For test purposes a local island load $Z_{ld}$ is connected to the distributed generator, as shown in Fig. 2. The parallel L and C of the load are tuned to the fundamental frequency of the network and split to match the reactive power generation of the distributed generator. The resistor is chosen to match the active power generation of the distributed generator. During the test the active and reactive power injected in to the network shall not vary more than ±3 per cent of the rated kVA of the distributed generator, according to the UL 1741 test requirements. To test the inventive loss of mains detection, the incoming breaker is opened. In order to pass the loss of mains detection test, the distributed generator has to trip within 2 seconds from the opening of the incoming breaker.

The inventive loss of mains detection is based on injection of reactive current or power at fundamental or any other selected frequency. The injection levels are chosen to be within the UL 1741 standard limits of ±3 per cent of the rated current.

In an exemplary embodiment of the inventive loss of mains detection, a reactive current reference square wave as shown in Fig. 4 is generated at a frequency of 5Hz with a magnitude of ±3 per cent of the rated current. The frequency of the reactive current reference square wave was set to 5Hz. Of course, the frequency can be set to another value above 5Hz or even below, as long as there are a sufficient number of changes in the reference current during the 2 second period.

The reactive current injection has an impact on the load voltage $u_{ld}$. The load voltage is therefore monitored and changes corresponding to the current injection are detected. As long as the utility grid is present and thus provides stability, the change in load voltage due to the injected reactive current reference square wave is minimal.

But as soon as the utility grid is disconnected by opening the incoming breaker $B_g$, the load voltage changes significantly. The impedance $Z_{ld}$ of the separated island load is several times higher than the total grid impedance.

In order to detect a loss of mains, the load voltage is sampled and stored every time a change in the reactive current reference square wave happens. The samples of the load voltage changes d and q axis voltages are held as shown in Fig. 5 and will be compared at the time of the next change in the reactive current reference square wave to the then current load voltage. The difference between the actual d and q axis voltages u(t) and the previously sampled and held values u(t-dt) is calculated. The absolute of the difference between the actual d and q axis voltages and their sampled and held values is then compared with an islanding detection threshold value LOMdet_u. If at any time the voltage change exceeds the islanding detection threshold value a loss of mains is detected. In order not to falsely detect a loss of mains if the comparator values exceeds the threshold value due to a disturbance in the still available utility grid the following safety measure can be implemented.

A counter is implemented to count the number of loss of mains detections within a specified period of time. Each time a loss of mains is detected, a counter value is incremented. Within the UL 1741 standard specified time of two seconds, the exemplary reactive current square wave has 20 edges, thus changes its value 20 times. This gives a possibility of voltage comparison and loss of mains detection of at least 19 times within the two second interval. At the end of the interval, if the counter has not gone above a predefined counter threshold value LOMcnt, e.g. above 10, it is assumed that there is no loss of mains and that disturbances in the utility grid voltage have caused voltage jumps. If the counter does go above the specified number, then a loss of mains is detected. The counter is reset at the beginning of every period of two seconds.

Instead of a square wave the reactive current reference injected can alternatively be a ramp wave, a sine wave or a trapezoidal wave. The reference wave can be used to trigger the sampling of the load voltage. A sample of the monitored voltage is taken each time the current wave passes a certain threshold value or when it changes from a positive to a negative value or vice-versa.

Assuming a linear load and an active power difference of ΔP and reactive power difference of ΔQ, the load voltage jump as a function of difference power when the utility grid is lost is given by,

$$(\Delta u_d + j\Delta u_q) \cdot (\Delta u_d + j\Delta u_q) = (\Delta P + j\Delta Q) \cdot (R_{load} + jX_{load})$$

$$\textit{or}$$

$$\Delta u_d^2 - \Delta u_q^2 = \Delta P R_{load} - \Delta Q X_{load} \qquad (1)$$

$$2\Delta u_d \Delta u_q = \Delta P X_{load} + \Delta Q R_{load}$$

Both d and q axis voltages $u_d$ and $u_q$ get disturbed in case of a loss of mains. This causes the voltage angle to suddenly change and therefore the PLL will change the frequency $f$. This in turn will decrease or increase the frequency depending on the impedance and change in powers.

The inventive loss of mains detection is therefore preferably used in combination with an additional detection of loss of mains based on d$f$/dt and over-/under voltage. The additional detections are also included in Fig. 5.

If the frequency or either or both of the active and/ or reactive voltage changes faster than a given rate (LOMdet_f, LOMdet_d or LOMdet_q), this is an indication for loss of grid.

Both of these two additional detections can be used for fast loss of mains detection whenever the local load does not match the power generation. The output of each detection branch is monitored and loss of mains is detected by the system whenever at least one of the paralleled detection systems produces a positive loss of mains detection signal.

List of Reference Symbols

| | |
|---|---|
| $B_{DR}$ | breaker distributed resource |
| $B_g$ | incoming breaker |
| DG | Distributed generator |
| $Z_{ld}$ | Local island load |
| LOMdet_d, LOMdet_q, LOMdet_u, LOMdet_f | Islanding detection threshold values |
| LOMcnt | Islanding detection counter threshold |
| 1 | Local island |
| 2 | Utility grid |

**Claims**

1. Method for detecting islanding operation of a distributed resource, said distributed resource having a local island load ($Z_{ld}$), comprising the steps of
   introducing a reactive reference wave current,
   detecting changes of the local island load voltage caused by the reactive reference wave current by measuring, sampling and storing the actual load voltage values (u(t)) and by calculating the absolute of the difference between the actual load voltage values (u(t)) and the previously measured sampled and stored load voltage values (u(t-dt)), said load voltage values measured, sampled and stored being every time the reactive reference wave current passes a threshold value or when it changes from a positive to a negative value or vice-versa, and
   determining whether the detected changes of the local island load voltage exceed a predefined islanding detection threshold value, indicating an islanding operation of the distributed resource.

2. Method of claim 1, wherein
   the reactive reference wave current is any of the following: a square wave, a ramp wave, a sine wave or a trapezoidal wave.

3. Method of any of claims 1 or 2, wherein
   the reactive reference wave current introduced is a square wave, and the load voltage changes are detected every time the reference current changes its value.

4. Method of any of claims 1 to 3, further comprising the step of
   incrementing a counter value every time the detected load voltage changes exceed the predefined islanding detection threshold value, and

detecting an islanding operation if within a predefined period of time the increment of the counter value exceeds a predefined counter threshold value (LOMcnt).

5. Method of claim 4, wherein
   the counter value is reset at the beginning of the predefined period of time, and
   the islanding operation is detected if the counter value exceeds the predefined counter threshold value (LOMcnt) at the end of the predefined period of time.

6. Method of any one of claims 1 to claim 5, wherein in addition
   the change of load voltage frequency (df(t)/dt) is detected, and
   the islanding operation is detected if the change rate of frequency exceeds a predefined rate (LOMdet_f).

7. Method of any one of claims 1 to claim 6, wherein in addition
   the change in active and/ or reactive load voltage ($du_d$(t)/dt, $du_q$(t)/dt) are detected, and
   the islanding operation is detected if the load voltage change rate exceeds a predefined rate(LOMdet_d, LOMdet_q).

8. Device for detecting islanding operation of a distributed resource said distributed resource having a local island load ($Z_{id}$); comprising
   means for introducing a reactive reference wave current,
   means for detecting changes of the local island load voltage caused by the reactive reference wave current, said detecting means comprising
   means for measuring, sampling and storing the actual load voltage values (u(t)) and means for calculating the absolute of the difference between the actual load voltage values (u(t)) and the previously measured, sampled and stored load voltage values (u(t-dt)) said load voltage values being measured, sampled and stored every time the reactive reference wave current passes a threshold value or when it changes from a positive to a negative value or vice-versa, and
   means for determining whether the detected changes of the local island load voltage exceed a predefined islanding detection threshold value, indicating an islanding operation of the distributed resource.

9. Device of claim 8, further comprising
   a counter, the value of which can be incremented every time the detected changes of the local island load voltage exceed the predefined islanding detection threshold value, and
   means for detecting an islanding operation if within a predefined period of time the increment of the counter value or the counter value itself exceeds a predefined value.

**Patentansprüche**

1. Verfahren zum Detektieren eines Inselbetriebs eines verteilten Betriebsmittels, wobei das verteilte Betriebsmittel eine lokale Insellast ($Z_{id}$) aufweist, mit den folgenden Schritten:

   Einführen eines reaktiven Referenzwellenstroms,
   Detektieren von durch den reaktiven Referenzwellenstrom verursachten Änderungen der lokalen Insellastspannung durch Messen, Abtasten und Speichern der tatsächlichen Lastspannungswerte (u(t)) und durch Berechnen des Absolutwerts der Differenz zwischen den tatsächlichen Lastspannungswerten (u(t)) und den zuvor gemessenen, abgetasteten und gespeicherten Lastspannungswerten (u(t-dt)), wobei die Lastspannungswerte jedesmal gemessen, abgetastet und gespeichert werden, wenn der reaktive Referenzwellenstrom an einem Schwellenwert vorbeigeht oder wenn er von einem positiven zu einem negativen Wert wechselt oder umgekehrt, und
   Bestimmen, ob die detektierten Änderungen der lokalen Insellastspannung einen vordefinierten Inselbildungs-Detektionsschwellenwert überschreiten, wodurch ein Inselbetrieb des verteilten Betriebsmittels angezeigt wird.

2. Verfahren nach Anspruch 1, wobei
   der reaktive Referenzwellenstrom ein beliebiger der folgenden ist: eine Rechteckwelle, eine Rampenwelle, eine Sinuswelle oder eine Trapezwelle.

3. Verfahren nach einem der Ansprüche 1 oder 2, wobei
   der eingeführte reaktive Referenzwellenstrom eine Rechteckwelle ist und
   die Lastspannungsänderungen jedesmal detektiert werden, wenn der Referenzstrom seinen Wert ändert.

**4.** Verfahren nach einem der Ansprüche 1 bis 3, ferner mit den folgenden Schritten:

Inkrementieren eines Zählerwerts jedesmal, wenn die detektierten Änderungen der lokalen Insellastspannung den vordefinierten Inselbildungs-Detektionsschwellenwert überschreiten, und
Detektieren eines Inselbetriebs, wenn in einem vordefinierten Zeitraum das Inkrement des Zählerwerts einen vordefinierten Zählerschwellenwert (LOMcnt) überschreitet.

**5.** Verfahren nach Anspruch 4, wobei
der Zählerwert am Anfang des vordefinierten Zeitraums zurückgesetzt wird und
der Inselbetrieb detektiert wird, wenn der Zählerwert am Ende des vordefinierten Zeitraums den vordefinierten Zählerschwellenwert (LOMcnt) überschreitet.

**6.** Verfahren nach einem der Ansprüche 1 bis 5, wobei zusätzlich die Änderung der Lastspannungsfrequenz $(df(t)/dt)$ detektiert wird und
der Inselbetrieb detektiert wird, wenn die Änderungsrate der Frequenz eine vordefinierte Rate (LOMdet_f) überschreitet.

**7.** Verfahren nach einem der Ansprüche 1 bis 6, wobei zusätzlich
die Änderung der aktiven und/oder reaktiven Lastspannung $(du_d(t)/dt, du_q(t)/dt)$ detektiert werden und der Inselbetrieb detektiert wird, wenn die Lastspannungsänderungsrate eine vordefinierte Rate (LOMdet_d, LOMdet_q) überschreitet.

**8.** Einrichtung zum Detektieren eines Inselbetriebs eines verteilten Betriebsmittels, wobei das verteilte Betriebsmittel eine lokale Insellast (Zid) aufweist, umfassend:

Mittel zum Einführen eines reaktiven Referenzwellenstroms,
Mittel zum Detektieren von durch den reaktiven Referenzwellenstrom verursachten Änderungen der lokalen Insellastspannung, wobei die Detektionsmittel Mittel zum Messen, Abtasten und Speichern der tatsächlichen Lastspannungswerte (u(t)) und Mittel zum Berechnen des Absolutwerts der Differenz zwischen den tatsächlichen Lastspannungswerten (u(t)) und den zuvor gemessenen, abgetasteten und gespeicherten Lastspannungswerten (u(t-dt)) umfassen, wobei die Lastspannungswerte jedesmal gemessen, abgetastet und gespeichert werden, wenn der reaktive Referenzwellenstrom an einem Schwellenwert vorbeikommt oder wenn er von einem positiven zu einem negativen Wert wechselt oder umgekehrt, und
Mittel zum Bestimmen, ob die detektierten Änderungen der lokalen Insellastspannung einen vordefinierten Inselbildungs-Detektionsschwellenwert überschreiten, wodurch ein Inselbetrieb des verteilten Betriebsmittels angezeigt wird.

**9.** Einrichtung nach Anspruch 8, ferner umfassend:

einen Zähler, dessen Wert jedesmal inkrementiert werden kann, wenn die detektierten Änderungen der lokalen Insellastspannung den vordefinierten Inselbildungs-Detektionsschwellenwert überschreiten, und
Mittel zum Detektieren eines Inselbetriebs, wenn in einem vordefinierten Zeitraum das Inkrement des Zählerwerts oder der Zählerwert selbst einen vordefinierten Wert überschreitet.

**Revendications**

**1.** Procédé de détection d'un fonctionnement en îlotage d'une ressource décentralisée, ladite ressource décentralisée possédant une charge d'îlot local $(Z_{ld})$, le procédé comprenant les étapes consistant à :

introduire une onde de courant de référence réactif,
détecter les variations de la tension aux bornes de la charge d'îlot local dues à l'onde de courant de référence réactif en mesurant, échantillonnant et mémorisant les valeurs effectives (u(t)) de la tension aux bornes de la charge et en calculant la valeur absolue de la différence entre les valeurs effectives (u(t)) de la tension aux bornes de la charge et les valeurs précédemment mesurées, échantillonnées et mémorisées (u(t-dt)) de la tension aux bornes de la charge, lesdites valeurs de la tension aux bornes de la charge étant mesurées, échantillonnées et mémorisées chaque fois que l'onde de courant de référence réactif passe par une valeur seuil ou lorsqu'elle passe d'une valeur positive à une valeur négative ou inversement, et

déterminer si les variations détectées de la tension aux bornes de la charge d'îlot local excèdent une valeur seuil de détection d'îlotage prédéfinie, indiquant un fonctionnement en îlotage de la ressource décentralisée.

2. Procédé selon la revendication 1, l'onde de courant de référence réactif étant l'une quelconque des ondes suivantes : une onde carrée, une onde en dents de scie, une onde sinusoïdale ou une onde trapézoïdale.

3. Procédé selon l'une quelconque des revendications 1 ou 2, l'onde de courant de référence réactif introduite étant une onde carrée, et les variations de la tension aux bornes de la charge étant détectées chaque fois que l'onde de courant de référence change de valeur.

4. Procédé selon l'une quelconque des revendications 1 à 3, comprenant en outre les étapes consistant à :

   incrémenter une valeur de compteur chaque fois que les variations détectées de la tension aux bornes de la charge d'îlot local excèdent la valeur seuil de détection d'îlotage prédéfinie, et
   détecter un fonctionnement en îlotage si, dans un intervalle de temps prédéfini, l'incrément de la valeur de compteur excède une valeur seuil de compteur prédéfinie (LOMcnt).

5. Procédé selon la revendication 4,
   la valeur de compteur étant remise à zéro au début de l'intervalle de temps prédéfini, et
   le fonctionnement en îlotage étant détecté si la valeur de compteur excède la valeur seuil de compteur prédéfinie (LOMcnt) à la fin de l'intervalle de temps prédéfini.

6. Procédé selon l'une quelconque des revendications 1 à 5,
   les variations de la fréquence de la tension aux bornes de la charge (df(t)/dt) étant également détectées, et
   le fonctionnement en îlotage étant également détecté si le taux de variation de la fréquence excède un taux prédéfini (LOMdet_f).

7. Procédé selon l'une quelconque des revendications 1 à 6,
   les variations de la tension active et/ou réactive aux bornes de la charge ($du_d(t)/dt$, $du_q(t)/dt$) étant également détectées, et
   le fonctionnement en îlotage étant également détecté si le taux de variation de la tension aux bornes de la charge excède un taux prédéfini (LOMdet_d, LOMdet_q).

8. Dispositif de détection d'un fonctionnement en îlotage d'une ressource décentralisée, ladite ressource décentralisée possédant une charge d'îlot local ($Z_{ld}$), le dispositif comprenant :

   des moyens conçus pour introduire une onde de courant de référence réactif,
   des moyens conçus pour détecter les variations de la tension aux bornes de la charge d'îlot local dues à l'onde de courant de référence réactif, lesdits moyens de détection comprenant des moyens conçus pour mesurer, échantillonner et mémoriser les valeurs effectives (u(t)) de la tension aux bornes de la charge et des moyens conçus pour calculer la valeur absolue de la différence entre les valeurs effectives (u(t)) de la tension aux bornes de la charge et les valeurs précédemment mesurées, échantillonnées et mémorisées (u(t-dt)) de la tension aux bornes de la charge, lesdites valeurs de la tension aux bornes de la charge étant mesurées, échantillonnées et mémorisées chaque fois que l'onde de courant de référence réactif passe par une valeur seuil ou lorsqu'elle passe d'une valeur positive à une valeur négative ou inversement, et
   des moyens conçus pour déterminer si les variations détectées de la tension aux bornes de la charge d'îlot local excèdent une valeur seuil de détection d'îlotage prédéfinie, indiquant un fonctionnement en îlotage de la ressource décentralisée.

9. Dispositif selon la revendication 8, comprenant en outre :

   un compteur, dont la valeur peut être incrémentée chaque fois que les variations détectées de la tension aux bornes de la charge d'îlot local excèdent la valeur seuil de détection d'îlotage prédéfinie, et
   des moyens conçus pour détecter un fonctionnement en îlotage si, dans un intervalle de temps prédéfini, l'incrément de la valeur de compteur ou la valeur de compteur proprement dit excède une valeur prédéfinie.

Fig. 1

Fig. 2

Fig. 4

$$\phi_{ug}^* = 0$$

Fig. 3

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. E. KIM, ; J. S. HWANG.** Islanding Detection Method of Distributed Generation Units Connected to Power Distribution System. *IEEE,* 2000
- **SIMON R. WALL.** Performance of Inverter Interfaced Distributed Generation. *IEEE,* 2001

- **CH. JERAPUTRA et al.** An Improved Anti-Islanding Algorithm for Utility Interconnection of Multiple Distributed Fuel Cell Powered Generations. *IEEE,* 2005